# EUROPÄISCHE PATENTSCHRIFT

(11) **EP 2 903 778 B1**
(45) Veröffentlichungstag und Bekanntmachung des Hinweises auf die Patenterteilung: **08.07.2020**
(21) Anmeldenummer: 13802865.9
(22) Anmeldetag: 02.10.2013
(51) Int. Cl.: B23K 35/02, B23K 11/30, B23K 11/31, B23K 35/22, C22C 9/00, C22C 9/02, C22C 9/04, C22C 9/06

(54) **ELEKTRODE FÜR EINE SCHWEISSZANGE**
ELECTRODE FOR ELECTRODE HOLDER
ÉLECTRODE POUR PINCE À SOUDER

(30) Priorität: 05.10.2012 DE 102012019555
(43) Veröffentlichungstag der Anmeldung: 12.08.2015
(73) Patentinhaber: KME Germany GmbH & Co. KG, 49074 Osnabrück (DE)
(72) Erfinder: WOBKER, Hans-Günter, 49565 Bramsche (DE); RODE, Dirk, 49088 Osnabrück (DE); DRATNER, Christof, 49080 Osnabrück (DE); SCHULZE, Hark, 49205 Hasbergen (DE)
(74) Vertreter: Griepenstroh, Jörg
(86) Internationale Anmeldenummer: PCT/DE2013/000563
(87) Internationale Veröffentlichungsnummer: WO 2014/053117

(56) Entgegenhaltungen:
- WO-A1-2010/143294
- WO-A1-2010/146702
- FR-A1- 2 682 626
- JP-A- H07 195 180
- US-B1- 7 022 934

## Beschreibung

Die Erfindung betrifft eine Elektrode für eine Schweißzange umfassend einen Elektrodenschaft mit einer endseitigen Schweißkappe, die lösbar an einem Kappenhalter des Elektrodenschafts befestigt ist.

Schweißzangen besitzen im Bereich der Elektroden einen zumindest zweiteiligen Aufbau. Die so genannte Schweißkappe ist dasjenige Bauteil, das beim Schweißprozess mit den zu verschweißenden Bauteilen in Kontakt kommt. Die Schweißkappen unterliegen thermischen und mechanischen Beanspruchungen, die durch den Schweißprozess verursacht werden. Als Folge der dadurch auftretenden plastischen Verformung und Erweichung werden die Schweißkappen in regelmäßigen Abständen nachgearbeitet und nach Erreichen der Verschleißgrenze ausgetauscht.

Die Schweißkappen werden üblicherweise auf einen konischen Zapfen gesteckt. Der Winkel des Konus ist so gewählt, dass es zu einer Selbsthemmung kommt, so dass die Kappen nicht herunter fallen. Zudem werden sie während des Schweißprozesses immer in Längsrichtung des Konus belastet, so dass die Schweißkappen fest und dicht aufsitzen. Die Dichtheit im Bereich des Konus ist wichtig, da die Schweißkappe von innen mit Wasser gekühlt wird. Das Wasser wird über den konischen Kappenhalter am Elektrodenschaft zugeführt.

Zum Stand der Technik ist auf die WO 2010/146702 A1 hinzuweisen. Die Druckschrift offenbart eine Elektrode für eine Schweißzange mit einem Elektrodenschaft mit einer endseitigen Schweißkappe, die lösbar an einem Kappenhalter des Elektrodenschafts befestigt ist. Der Kappenhalter und die Schweißkappe bestehen aus einem Kupferwerkstoff, wobei der Kupferwerkstoff des Kappenhalters eine Festigkeit und eine Härte besitzt, wobei die jeweiligen Werte größer sind als die Festigkeit und Härte des Kupferwerkstoffes der Schweißkappe.

Zum Stand der Technik ist ferner auf die JP H07 195180 A hinzuweisen, die ebenfalls eine Schweißzange offenbart. Für den Kappenhalter wird eine Beryllium-Kupferlegierungen vorgeschlagen aufgrund ihrer großen Härte und guten Bearbeitbarkeit.

Die FR 2 682 626 A1 offenbart eine weitere Elektrode für eine Schweißzange. Hier wird eine Legierung aus Kupfer und Chrom für den Elektrodenschaft und die Elektrodenkappe vorgeschlagen, während ein Elektrodenhalter aus Messing gefertigt sein soll.

Ferner sind zum Stand der Technik die US 7,022,934 B1 sowie die WO 2010/143294 A1 zu nennen, die weitere Elektroden für Schweißzangen und deren konstruktiven Aufbau beschreiben.

Es hat sich gezeigt, dass der als Passsitz ausgebildete Konus bei einem Wechsel der Schweißkappen verschleißt. Dies ist darauf zurückzuführen, dass die Elektrodenkappen eine Härte von 140 HBW2,5/62,5 bis 170 HBW2,5/62,5 besitzen, während die Elektrodenschäfte, die in der Regel aus der Legierung CuCr1Zr besteht, grundsätzlich Härten zwischen 130 HBW2,5/62,5 bis 160 HBW2,5/62,5 haben. Dadurch tritt beim Wechsel der Elektrodenkappen abrasiver Verschleiß nicht an der Schweißkappe, sondern an dem Kappenhalter auf. Die Schweißkappen sitzen zudem so fest, dass sie mit einer Vorrichtung abgedreht werden müssen, was zu Verschleißspuren in Umfangsrichtung des Konus am Kappenhalter führt. Wenn trotz dieses Verschleißes eine neue Elektrodenkappe aufgesetzt wird, kann es zu Undichtigkeiten kommen mit der Folge, dass der gesamte Elektrodenschaft und mithin die gesamte Elektrode auszutauschen ist.

Der Erfindung liegt die Aufgabe zugrunde, eine Elektrode für eine Schweißzange aufzuzeigen, welche gegenüber bekannten Elektroden weniger anfällig für Verschleiß ist und eine höhere Standzeit besitzt.

Diese Aufgabe ist bei einer Elektrode mit den Merkmalen des Patentanspruchs 1 gelöst.

Vorteilhafte Weiterbildungen der Erfindung sind Gegenstand der Unteransprüche.

Die erfindungsgemäße Elektrode für eine Schweißzange umfasst einen Elektrodenschaft mit einer endseitigen Schweißkappe, die lösbar an einem Kappenhalter des Elektrodenschafts befestigt ist. Der Kappenhalter und die Schweißkappe bestehen aus einem Kupferwerkstoff, wobei der Kupferwerkstoff des Kappenhalters eine größere Festigkeit aufweist als der Kupferwerkstoff der Schweißkappe. Die unterschiedlichen Festigkeiten der Kupferwerkstoffe führen dazu, dass bei einem Wechsel der Schweißkappe nicht der Kappenhalter beschädigt wird, sondern die Schweißkappe. Die Festigkeiten verhalten sich mithin umgekehrt wie im Stand der Technik.

Die Erfindung hat zudem den Vorteil, dass nicht der gesamte Elektrodenschaft eine größere Festigkeit aufweisen muss als die Schweißkappe, sondern lediglich der Kappenhalter.

Wesentlich bei der Erfindung ist, dass derjenige Bereich, der im Bereich des Elektrodenschafts verschleißen kann, nämlich der Kappenhalter, im Rahmen des technisch Möglichen und insbesondere unter Beibehaltung einer möglichst hohen Leitfähigkeit einen hinreichenden Widerstand gegen mechanische Einflüsse besitzt. Dies ist durch die Wahl einer geeigneten Kupferwerkstoff-Paarung möglich

Der Kupferwerkstoff des Kappenhalters weist nicht nur eine größere Festigkeit auf als der Kupferwerkstoff der Schweißkappe, sondern zudem auch noch eine größere Härte. Wenn F1 und H1 für die Festigkeit und Härte des Kupferwerkstoffes des Kappenhalters stehen und F2 und H2 für die Festigkeit und Härte des Kupferwerkstoffes der Schweißkappe sollen folgende Bedingungen erfüllt sein:
F1 > F2
und H1 > H2.

Die Härte der Schweißkappe liegt in einem Bereich von 160 HBW2,5/62,5 bis 180 HBW2,5/62,5. Die Härte des Kappenhalters soll mithin im Mittel in einem größeren Härtebereich liegen. Sie beträgt 180 HBW2,5/62,5 bis 220 HBW2,5/187,5. Insbesondere liegt die Härte des Kappenhalters über 190 HBW. Durch einen Härteunterschied von 10 HBW bis 30 HBW wird sichergestellt, dass beim Wechsel der Verschleißkappe die mechanische Beanspruchung maßgeblich auf Seiten der Schweißkappe erfolgt und nicht zu Beschädigungen der Oberfläche des Kappenhalters führt.

Für die Werkstoffauswahl des Elektrodenschafts kommen sowohl hochleitfähige als auch hochfeste Kupferwerkstoffe in Frage. Eine Rolle für die Werkstoffwahl spielt hierbei, ob der Elektrodenschaft auf Druck beansprucht wird, wie ein gerader Elektrodenschaft, oder ob der Elektrodenschaft gebogen ist und mithin auf Biegung beansprucht wird. Bei der Schweißkappe ist zu beachten, dass eine hohe Wärmebeanspruchung erfolgt, so dass die Schweißkappe aus einer aushärtbaren und damit warmfesten Kupferlegierung bestehen muss. Bei den aushärtbaren Werkstoffen ist allerdings die spezifische elektrische Leitfähigkeit niedriger und damit der Stromverbrauch höher als bei reinen Kupferqualitäten. Die spezifische Leitfähigkeit beträgt bei CuCrZr 45 MS/m bis 50 MS/m. Bei CuNiSiCr beträgt die spezifische elektrische Leitfähigkeit ca. 25 MS/m bis 30 MS/m.

Eine Temperaturbeanspruchung liegt im hinteren Teil des Elektrodenschafts so gut wie nicht vor. Die mechanische Beanspruchung im hinteren Teil kann je nach konstruktiver Ausführung gering bis hoch sein. Typische Anpresskräfte bei Schweißvorgängen liegen in einer Größenordnung von 4,5 kN. Die Druckbeanspruchung bei geraden Elektrodenschäften beträgt oftmals nur ca. 5 MPa, wobei ein Außendurchmesser eines kreisrunden Elektrodenschafts von 35 mm und ein Innendurchmesser von 12 mm angenommen worden ist.

Der Elektrodenschaft besteht aus dem hochfesten Kupferwerkstoff CuNiSi mit 0,5 - 4,0 Gew.-% Nickel (Ni) und 0,1 - 2,0 Gew.-% Silizium (Si).

Der Kappenhalter besteht vorzugsweise aus CuNiSi mit 0,5 - 4,0 Gew.-% Nickel (Ni) und 0,1 - 2,0 Gew.-% Silizium (Si).

Alle Angaben verstehen sich zuzüglich erschmelzungsbedingter Verunreinigungen im Rahmen der technisch üblichen Reinheiten.

Bei einer Werkstoffkombination aus verschleißbeständigem Kappenhalter und einem Elektrodenschaft kann die Festigkeit des Elektrodenschafts auch durch reine Kaltverformung und/oder durch eine Mischkristallverfestigung und/oder durch eine Aushärtung sowie eine Kombination der drei Verfahren erzielt werden.

Mit der Erfindung wird insbesondere ein Elektrodenschaft aus einem verschleißbeständigen Kupferwerkstoff bereitgestellt, der vorzugsweise eine hohe Härte besitzt. Dies gilt insbesondere für den Kappenhalter, der materialeinheitlich einstückiges Bestandteil des Elektrodenschafts sein kann oder als separates Bauteil mit dem Elektrodenschaft verbunden ist. Insbesondere besteht der Kappenhalter aus einem verschleißbeständigen Werkstoff, insbesondere einem solchen mit höherer Festigkeit und/oder Härte als der Elektrodenschaft selbst.

Aus diesem Grund können die vorgenannten Werkstoffe je nach Anwendungsfall zusätzlich noch ein oder mehrere Legierungskomponenten aufweisen, ausgewählt aus der nachfolgenden Gruppe. Sofern die in der nachfolgend genannten Gruppe enthaltenen Legierungskomponenten bereits Bestandteil der oben genannten Legierungen sind, gelten die ursprünglich genannten Legierungsbereiche. Die in Frage kommenden Legierungskomponenten sind in den gegebenen Grenzen:

| | |
|---|---|
| Phosphor (P) | 0,001 - 0,05 Gew.-% |
| Mangan (Mn) | 0,01 - 0,8 Gew.-% |
| Chrom (Cr) | 0,01 - 0,5 Gew.-% |
| Aluminium (Al) | 0,01 - 0,5 Gew.-% |
| Magnesium (Mg) | 0,01 - 0,5 Gew.-% |
| Eisen (Fe) | 0,01 - 0,5 Gew.-% |
| Zink (Zn) | 0,01 - 2,5 Gew.-% |
| Zirkon (Zr) | 0,01 - 0,5 Gew.-% |
| Zinn (Sn) | 0,01 - 2,5 Gew.-% |
| Silber (Ag) | 0,01 - 0,5 Gew.-% |

Zu den zusätzlichen Legierungsbestandteilen ist anzumerken, dass Phosphor als Desoxidationsmittel dient, das den in der Schmelze gelösten freien Sauerstoff an sich bindet und somit Gasblasen (auch Wasserstoffkrankheit) und Oxidation von Legierungsbestandteilen verhindert. Des Weiteren wird Phosphor zugegeben, um die Fließeigenschaften der Kupferlegierung beim Gießen zu verbessern.

Mangan verfeinert das Korn und verbessert in der Kombination mit Schwefel die Zerspanbarkeit bzw. verhindert eine Phasenbildung des Schwefels mit den Legierungselementen des entsprechenden Legierungstyps. Mangan dient ebenfalls als Desoxidationsmittel.

Aluminium erhöht die Härte und Dehngrenze ohne Verminderung der Zähigkeit. Aluminium ist ein Element, das die Festigkeit, Bearbeitbarkeit und Verschleißbeständigkeit sowie die Oxidationsresistenz bei hohen Temperaturen verbessert.

Chrom und Magnesium dienen zur Verbesserung der Oxidationsresistenz bei hohen Temperaturen. Besonders gute Ergebnisse werden hierbei erzielt, wenn diese mit Aluminium gemischt werden, um einen Synergieeffekt zu erzielen.

Eisen erhöht die Korrosionsbeständigkeit und bildet zusammen mit Phosphor Eisenphosphid-Phasen zur Härtesteigerung.

Zirkon verbessert die Warmumformbarkeit.

Zinn steigert die Mischkristallverfestigung.

Silber erhöht die Rekristallisationstemperatur ohne die Leitfähigkeit nennswert zu erniedrigen.

Die Mehrteiligkeit der Elektrode kann in konstruktiver Hinsicht durch eine lösbare Verbindung zwischen dem Kappenhalter und dem Elektrodenschaft realisiert werden. Die Schweißkappe selbst bleibt ein austauschbares Teil. Die Verbindung zwischen dem Kappenhalter und der Schweißkappe ist mithin vorzugsweise immer eine lösbare Verbindung. Da es jedoch zwei mögliche Schnittstellen für lösbare Verbindungen gibt, nämlich einmal zwischen dem Kappenhalter und der Schweißkappe sowie zwischen dem Kappenhalter und dem Elektrodenschaft, ist es möglich, bei Bedarf den Kappenhalter zusammen mit der Schweißkappe auszutauschen, falls sich die Schweißkappe aus bestimmten Gründen nicht entfernen lässt oder falls der Kappenhalter verschlissen sein sollte.

Die Verbindung zwischen dem Kappenhalter und dem Elektrodenschaft ist insbesondere eine Schraubverbindung. Schraubverbindungen lassen sich einfach und kostengünstig realisieren und ermöglichen bei entsprechenden Anzugsmomenten einen ausreichend festen Sitz für die Beanspruchungsart. Zudem können Schraubverbindungen die notwendige Dichtigkeit herstellen.

Zudem kann in der Schraubenverbindung eine Dichtscheibe, vorzugsweise aus Kupfer oder einer Kupferlegierung, eingebracht werden um die Dichtheit der Verbindung sicher zu gewährleisten. Die Dichtscheibe kann aus den vorher aufgeführten Kupferwerkstoffen bzw. Kupferlegierungen bestehen.

Der Kappenhalter besitzt in bevorzugter Ausgestaltung an einem Ende einen Gewindeabschnitt für die Schraubverbindung mit dem Elektrodenschaft und an seinem anderen Ende einen Konus als Steckaufnahme für die Schweißkappe. Hierbei sind der Gewindeabschnitt und der Konus fluchtend angeordnet. Die Längsrichtung des Kappenhalters entspricht beim Schweißen der Richtung der Krafteinleitung, so dass der Gewindeabschnitt nicht auf Biegung beansprucht wird. Gleichzeitig wird die Schweißkappe fest gegen den Konus gedrückt und ist dadurch sicher am Konus gehalten.

Im Kappenhalter befindet sich ein Kühlkanal, der sich in Längsrichtung des Kappenhalters erstreckt. Dadurch kann eine Kühlflüssigkeit an die Schweißkappe herangebracht werden, um die beim Schweißen entstehende Wärme abzuführen.

Es kann zusätzlich eine Dichtscheibe zwischen dem Kappenhalter und der Schweißkappe und/oder zwischen dem Kappenhalter und dem Elektrodenschaft angeordnet sein, insbesondere wenn es sich um Schraubverbindungen handelt. Die Dichtscheibe kann aus einem Kupferwerkstoff bestehen.

In alternativer Ausgestaltung ist es möglich, den Kappenhalter unlösbar mit dem Elektrodenschaft zu verbinden. Mögliche Fügeverfahren sind bevorzugt solche mit geringer Wärmeeinbringung. Es kann sich um Hart- oder Weichlötverfahren handeln. Ebenso kommen Strahlschweißverfahren, wie beispielsweise das Laser- und Elektronenstrahlschweißen, in Frage. Auch eine Kombination dieser Verfahren untereinander ist möglich, ebenso wie eine Kombination mittels WIG-Schweißen. Die Austauschbarkeit des Kappenhalters wird aber primär durch eine lösbare Verbindung ermöglicht, so dass hierin die bevorzugte Ausführungsform gesehen wird.

Die Erfindung wird nachfolgend anhand eines in den Zeichnungen dargestellten Ausführungsbeispiels näher erläutert. Es zeigt:
- Figur 1: eine Elektrode in konventioneller Bauweise (Stand der Technik);
- Figur 2: eine erfindungsgemäße Elektrode;
- Figur 3: einen Längsschnitt durch die Elektrode der Figur 2;
- Figur 4: einen Kappenhalter in perspektivischer Darstellung und
- Figur 5: eine Schweißkappe in perspektivischer Darstellung.

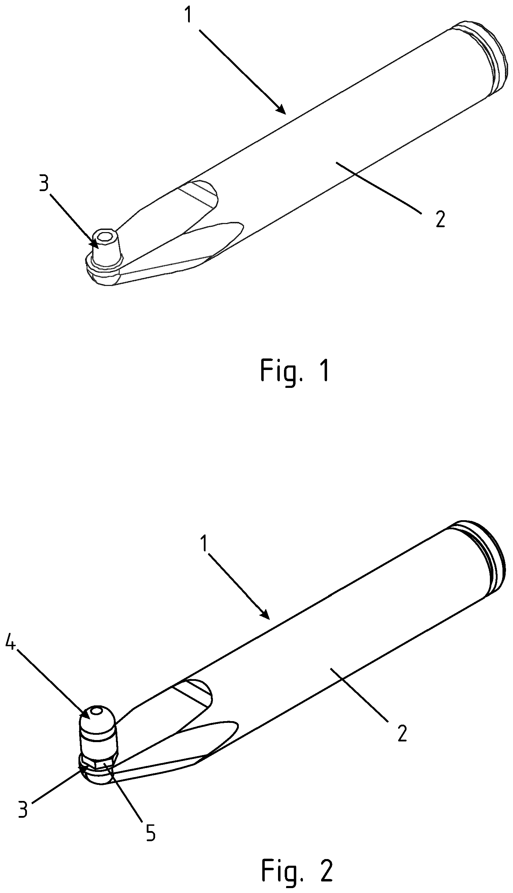

Figur 1 zeigt eine Elektrode für eine nicht näher dargestellte Schweißzange. Die Schweißzange umfasst eine weitere, gegebenenfalls baugleiche Elektrode, die nicht näher dargestellt ist. Die dargestellte Elektrode ist einstückig ausgebildet und umfasst einen langgestreckten, zylindrischen Elektrodenschaft 2, der an einem Ende spitz zuläuft und einen so genannten Kappenhalter 3 in Form eines quer abstehenden, konischen Hohlzapfens aufweist. In der Darstellung der Figur 1 ragt dieser Hohlzapfen nach oben. Sein Durchmesser ist geringer als der des Elektrodenschafts 2. Er dient zur Aufnahme einer nicht näher dargestellten Schweißkappe, die als Gegenstück eine konische Aufnahme besitzt und über den Kappenhalter gestülpt wird. Der Elektrodenschaft 2 besitzt einen Kühlmittelkanal und ist innenseitig mit einem Kühlmittelkanal im Kappenhalter 3 verbunden, so dass innenseitig ein Kühlfluid bis zum Kappenhalter 3 geleitet werden kann, das dazu dient, die Schweißkappe zu kühlen. Dadurch wird die beim Schweißen entstehende Wärme abgeführt. Der Kappenhalter 3 ist materialeinheitlich einstückiges Bestandteil des Elektrodenschafts. Wenn der Kappenhalter 3 im Bereich seines Außenkonus verschlissen ist, muss der gesamte Elektrodenschaft 2 und mithin die gesamte Elektrode 1 ausgetauscht werden.

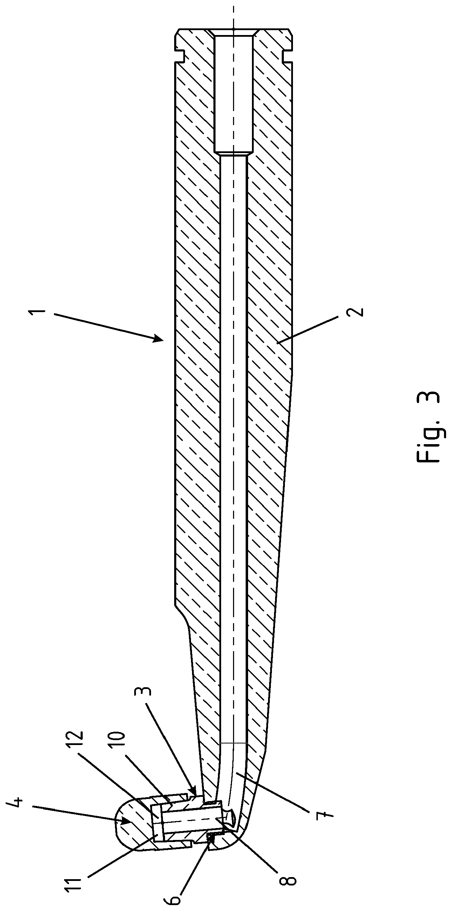

Die erfindungsgemäße Ausgestaltung der Elektrode gemäß Figur 2 sieht nunmehr eine mehrteilige Ausführungsform vor. Nachfolgend werden für im Wesentlichen identische Bauteile die bereits in Figur 1 eingeführten Bezugszeichen verwendet. Die erfindungsgemäße Elektrode 1 umfasst wiederum einen im Wesentlichen zylindrischen Elektrodenschaft 2, der sich an einem Ende verjüngt und wiederum einen quer zur Längsrichtung des Elektrodenschafts 2 abstehenden Kappenhalter 3 besitzt, auf den eine Schweißkappe 4 aufgesetzt ist. Von dem Kappenhalter 3 ist in Figur 2 nur eine Werkzeuganlagefläche 5 zu erkennen. Hier kann ein Sechskantschlüssel aufgesetzt werden, um den Kappenhalter 3 in den Elektrodenschaft 2 einzuschrauben. Einzelheiten hierzu sind in Figur 3 erkennbar.

Figur 3 zeigt die aus unterschiedlichen Kupferwerkstoffen bestehenden Bestandteile der erfindungsgemäßen Elektrode 1. Der Elektrodenschaft 2 besteht bei diesem nicht erfindungsgemäßen Beispiel aus einem hochleitfähigen Kupferwerkstoff, beispielsweise der Werkstoffgruppen Cu-OF, Cu-OFE, Cu-ETP, Cu-HCP, Cu-PLP, Cu-PHC, DLPS-Cu oder CuAg01P. Der verschleißbeständigste Bestandteil der Elektrode muss neben der Schweißkappe 4 der Kappenhalter 3 sein. Es ist zu erkennen, dass der Kappenhalter 3 über eine Schraubverbindung 6 in den Elektrodenschaft 2 geschraubt ist. Hierbei wird eine dichte Verbindung zwischen einem Kühlmittelkanal 7 im Inneren des Elektrodenschafts 2 und einem Kühlkanal 8 geschaffen, der den gesamten Kappenhalter 3 durchsetzt.

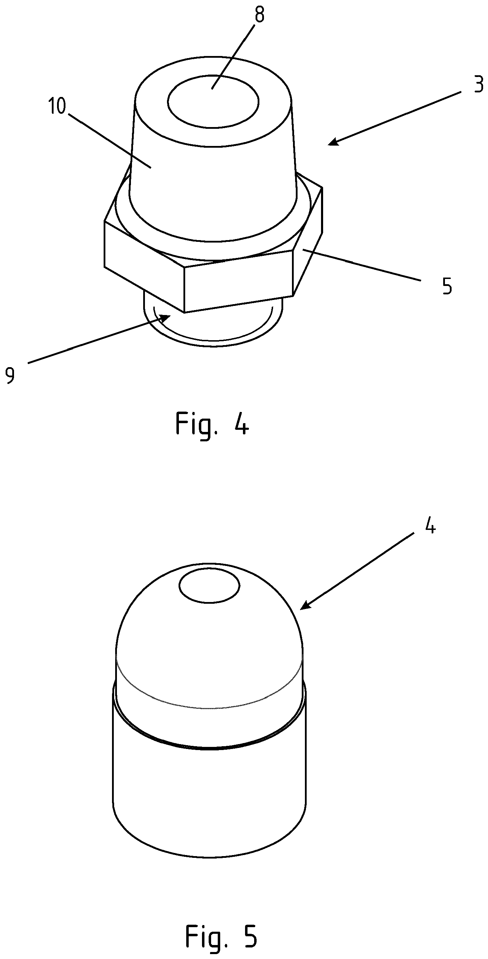

Figur 4 zeigt in vergrößerter Darstellung den Kappenhalter 3 mit seinem Gewindeabschnitt 9 im Fußbereich und die darauf folgende Werkzeuganlagefläche 5, in Form eines Außensechskants. Hierauf schließt sich dann ein außenseitig konischer Zapfen (Konus 10) an, auf den die Schweißkappe, wie sie in Figur 5 dargestellt ist, aufgesteckt werden kann. Die Schweißkappe 4 zeigt in der Zusammenbauposition, dass sie an ihrer unteren Seite eine konische Öffnung aufweist, wobei die Konizität der Öffnung mit dem Konus 10 des Kappenhalters 3 zusammenpasst. Ein Freiraum 11 zwischen der Stirnseite des Konus 10 und dem Tiefsten der konischen Aufnahme 12 verhindert, dass die Schweißkappe 4 auf dem Kappenhalter 3 aufsitzt. Es handelt sich in jedem Fall um eine Klemmverbindung. Zudem wird der Freiraum 11 von Kühlflüssigkeit durchströmt, so dass eine größere Wärmeübertragerfläche zwischen dem Kühlmedium und der Schweißkappe 4 geschaffen wird, um eine effektive Wärmeabfuhr zu ermöglichen. Der Kegel zwischen dem Kappenhalter 3 und der Schweißkappe 4 beträgt vorzugsweise 1 : 10.

Die Schweißkappe 4 in Figur 5 besitzt beispielsweise eine Höhe von 22 mm und einen Durchmesser von 16 mm. Die Schweißkappe ist in ihrer oberen Hälfte halbkugelförmig gerundet und an der Spitze in einem Durchmesserbereich von ca. 5 mm abgeflacht. Der untere Teil der Schweißkappe schließt sich in zylindrischer Form an die gerundete obere Hälfte an und dient innenseitig zur Ausbildung der konischen Aufnahme 12, wie sie in Figur 3 dargestellt ist.

### Bezugszeichen:

- 1 -: Elektrode
- 2 -: Elektrodenschaft
- 3 -: Kappenhalter
- 4 -: Schweißkappe
- 5 -: Werkzeugangrifffläche
- 6 -: Schraubverbindung
- 7 -: Kühlmittelkanal
- 8 -: Kühlmittelkanal
- 9 -: Gewindeabschnitt
- 10 -: Konus
- 11 -: Freiraum
- 12 -: Aufnahme

## Patentansprüche

1. Elektrode für eine Schweißzange umfassend einen Elektrodenschaft (2) mit einer endseitigen Schweißkappe (4), die lösbar an einem Kappenhalter (3) des Elektrodenschafts (1) befestigt ist, wobei der Kappenhalter (3) und die Schweißkappe (4) aus einem Kupferwerkstoff bestehen, wobei der Kupferwerkstoff des Kappenhalters (3) eine Festigkeit F1 und eine Härte H1 besitzt und wobei der Kupferwerkstoff der Schweißkappe (4) eine Festigkeit F2 und eine Härte H2 besitzt, wobei F1 größer F2 ist und wobei H1 größer H2 ist, **dadurch gekennzeichnet, dass** die Härte H2 der Schweißkappe (4) in einem Bereich von 160 HBW2,5/62,5 bis 180 HBW2,5/62,5 liegt und die Härte H1 des Kappenhalters (3) über 180 HBW2,5/62,5 liegt und bis 220 HBW2,5/187,5 beträgt, wobei der Elektrodenschaft (2) aus dem hochfesten Kupferwerkstoff CuNiSi mit 0,5 - 4,0 Gew.-% Ni und 0,1 - 2,0 Gew.-% Si besteht und wobei der Kappenhalter (3) aus CuNiSi mit 0,5 - 4,0 Gew.-% Ni und 0,1 - 2,0 Gew.-% Si besteht.

2. Elektrode nach Anspruch 1, **dadurch gekennzeichnet, dass** der Werkstoff zusätzlich ein oder mehrere Legierungskomponenten ausgewählt aus der nachfolgenden Gruppe enthalten kann, sofern diese nachfolgend genannten Legierungskomponenten nicht bereits in den zu den vorstehend genannten Werkstoffen enthaltenen Grenzen enthalten sind:
| | |
|---|---|
| Phosphor (P) | 0,001 - 0,05 Gew.-% |
| Mangan (Mn) | 0,01 - 0,8 Gew.-% |
| Chrom (Cr) | 0,01 - 0,5 Gew.-% |
| Aluminium (Al) | 0,01 - 0,5 Gew.-% |
| Magnesium (Mg) | 0,01 - 0,5 Gew.-% |
| Eisen (Fe) | 0,01 - 0,5 Gew.-% |
| Zink (Zn) | 0,01 - 2,5 Gew.-% |
| Zirkon (Zr) | 0,01 - 0,5 Gew.-% |
| Zinn (Sn) | 0,01 - 2,5 Gew.-% |
| Silber (Ag) | 0,01 - 0,5 Gew.-% |

3. Elektrode nach Anspruch 1 oder 2, **dadurch gekennzeichnet, dass** der Kappenhalter (3) lösbar mit dem Elektrodenschaft (1) verbunden ist.

4. Elektrode nach einem der Ansprüche 1 bis 3, **dadurch gekennzeichnet, dass** der Kappenhalter (3) über eine Schraubverbindung (6) mit dem Elektrodenschaft (1) verbunden ist.

5. Elektrode nach einem der Ansprüche 1 bis 4, **dadurch gekennzeichnet, dass** der Kappenhalter (3) an einem Ende einen Gewindeabschnitt (9) für die Schraubverbindung (6) mit dem Elektrodenschaft (1) aufweist und an seinem anderen Ende einen Konus (10) als Steckaufnahme für die Schweißkappe (4), wobei der Gewindeabschnitt (9) und der Konus (10) fluchtend angeordnet sind.

6. Elektrode nach Anspruch 5, **dadurch gekennzeichnet, dass** im Kappenhalter (3) ein Kühlmittelkanal (8) angeordnet ist, der sich in Längsrichtung des Kappenhalters (3) erstreckt.

7. Elektrode nach einem der Ansprüche 1 bis 6, **dadurch gekennzeichnet, dass** eine Dichtscheibe zwischen dem Kappenhalter (3) und der Schweißkappe (4) und/oder zwischen dem Kappenhalter (3) und dem Elektrodenschaft (1) angeordnet ist.

8. Elektrode nach Anspruch 1 oder 2, **dadurch gekennzeichnet, dass** der Kappenhalter (3) unlösbar mit dem Elektrodenschaft (1) verbunden ist.

## Claims

1. Electrode for an electrode holder comprising an electrode shaft (2) having a terminal welding cap (4) which is detachably secured to a cap holder (3) of the electrode shaft (2), wherein the cap holder (3) and the welding cap (4) consist of a copper material, wherein the copper material of the cap holder (3) has a strength F1 and a hardness H1 and wherein the copper material of the welding cap (4) has a strength F2 and a hardness H2, wherein F1 is greater than F2 and wherein H1 is greater than H2, **characterised in that** the hardness H2 of the welding cap (4) lies within a range from 160 HBW2.5/62.5 to 180 HBW2.5/62.5 and the hardness H1 of the cap holder (3) lies above 180 HBW2.5/62.5 and is up to 220 HBW2.5/187.5, wherein the electrode shaft (2) consists of the high-strength copper material CuNiSi with 0.5 - 4.0 wt.% Ni and 0.1 - 2.0 wt.% Si and wherein the cap holder (3) consists of CuNiSi with 0.5 - 4.0 wt.% Ni and 0.1 - 2.0 wt.% Si.

2. Electrode according to claim 1, **characterised in that** the material can contain additionally one or more alloy components selected from the group below, provided that these alloy components named below are not already contained within the limits contained in respect of the aforementioned materials:
| | |
|---|---|
| phosphorus (P) | 0.001 - 0.05 wt.% |
| manganese (Mn) | 0.01 - 0.8 wt.% |
| chromium (Cr) | 0.01 - 0.5 wt.% |
| aluminium (Al) | 0.01 - 0.5 wt.% |
| magnesium (Mg) | 0.01 - 0.5 wt.% |
| iron (Fe) | 0.01 - 0.5 wt.% |
| zinc (Zn) | 0.01 - 2.5 wt.% |
| zirconium (Zr) | 0.01 - 0.5 wt.% |
| tin (Sn) | 0.01 - 2.5 wt.% |
| silver (Ag) | 0.01 - 0.5 wt.%. |

3. Electrode according to claim 1 or 2, **characterised in that** the cap holder (3) is detachably connected to the electrode shaft (2).

4. Electrode according to any one of claims 1 to 3, **characterised in that** the cap holder (3) is connected to the electrode shaft (1) via a screw connection (6).

5. Electrode according to any one of claims 1 to 4, **characterised in that** the cap holder (3) has at one end a threaded section (9) for the screw connection (6) with the electrode shaft (1) and at its other end a cone (10) as push-on mount for the welding cap (4), wherein the threaded section (9) and the cone (10) are arranged so as to be aligned with each other.

6. Electrode according to claim 5, **characterised in that** a coolant channel (8) is arranged in the cap holder (3) and extends in longitudinal direction of the cap holder (3).

7. Electrode according to any one of claims 1 to 6, **characterised in that** a sealing disc is arranged between the cap holder (3) and the welding cap (4) and/or between the cap holder (3) and the electrode shaft (1).

8. Electrode according to claim 1 or 2, **characterised in that** the cap holder (3) is connected non-detachably to the electrode shaft (2).

## Revendications

1. Electrode pour une pince à souder comprenant une tige d'électrode (2) avec un capuchon de soudage (4) côté extrémité, qui est fixé de manière détachable à un porte-capuchon (3) de la tige d'électrode (2), dans laquelle le porte-capuchon (3) et le capuchon de soudage (4) sont constitués d'un matériau à base de cuivre, dans laquelle le matériau à base de cuivre du porte-capuchon (3) possède une résistance F1 et une dureté H1 et dans laquelle le matériau à base de cuivre du capuchon de soudage (4) possède une résistance F2 et une dureté H2, dans laquelle F1 est supérieure à F2 et dans laquelle H1 est supérieure à H2, **caractérisée en ce que** la dureté H2 du capuchon de soudage (4) se situe dans une plage de 160 HBW2,5/62,5 à 180 HBW2,5/62,5 et la dureté H1 du porte-capuchon (3) se situe au-dessus de 180 HBW2,5/62,5 et atteint jusqu'à 220 HBW2,5/187,5, dans laquelle la tige d'électrode (2) est constituée du matériau à base de cuivre CuNiSi à haute résistance avec 0,5 - 4,0 % en poids de Ni et 0,1 - 2,0 % en poids de Si et dans laquelle le porte-capuchon (3) est constitué de CuNiSi avec 0,5 - 4,0 % en poids de Ni et 0,1 - 2,0 % en poids de Si.

2. Electrode selon la revendication 1, **caractérisée en ce que** le matériau peut contenir en plus un ou plusieurs composants d'alliage sélectionnés dans le groupe suivant, dans la mesure où ces composants d'alliage cités ci-après ne sont pas déjà contenus dans les limites contenues par rapport aux matériaux cités ci-avant :
| | |
|---|---|
| phosphore (P) | 0,001 - 0,05 % en poids |
| manganèse (Mn) | 0,01 - 0,8 % en poids |
| chrome (Cr) | 0,01 - 0,5 % en poids |
| aluminium (Al) | 0,01 - 0,5 % en poids |
| magnésium (Mg) | 0,01 - 0,5 % en poids |
| fer (Fe) | 0,01 - 0,5 % en poids |
| zinc (Zn) | 0,01 - 2,5 % en poids |
| zircon (Zr) | 0,01 - 0,5 % en poids |
| étain (Sn) | 0,01 - 2,5 % en poids |
| argent (Ag) | 0,01 - 0,5 % en poids |

3. Electrode selon la revendication 1 ou 2, **caractérisée en ce que** le porte-capuchon (3) est relié de manière détachable à la tige d'électrode (2).

4. Electrode selon l'une quelconque des revendications 1 à 3, **caractérisée en ce que** le porte-capuchon (3) est relié à la tige d'électrode (1) par l'intermédiaire d'une liaison vissée (6).

5. Electrode selon l'une quelconque des revendications 1 à 4, **caractérisée en ce que** le porte-capuchon (3) présente à une extrémité une section filetée (9) pour la liaison vissée (6) à la tige d'électrode (1) et à son autre extrémité un cône (10) en tant que logement d'enfichage pour le capuchon de soudage (4), dans laquelle la section filetée (9) et le cône (10) sont disposés en alignement.

6. Electrode selon la revendication 5, **caractérisée en ce qu'**un canal de refroidissement (8), qui s'étend dans la direction longitudinale du porte-capuchon (3), est disposé dans le porte-capuchon (3).

7. Electrode selon l'une quelconque des revendications 1 à 6, **caractérisée en ce qu'**une rondelle d'étanchéité est disposée entre le porte-capuchon (3) et le capuchon de soudage (4) et/ou entre le porte-capuchon (3) et la tige d'électrode (1).

8. Electrode selon la revendication 1 ou 2, **caractérisée en ce que** le porte-capuchon (3) est relié à la tige d'électrode (2) de manière indétachable.
